Europäisches Patentamt

European Patent Office

Office européen des brevets

(11) Publication number: **0 463 574 A2**

## EUROPEAN PATENT APPLICATION

(21) Application number: **91110181.4**

(22) Date of filing: **20.06.91**

(51) Int. Cl.5: **G06F 15/72**

(30) Priority: **28.06.90 JP 168556/90**

(43) Date of publication of application:
**02.01.92 Bulletin 92/01**

(84) Designated Contracting States:
**DE GB**

(71) Applicant: **MITSUBISHI JUKOGYO KABUSHIKI KAISHA**
**5-1, Marunouchi 2-chome Chiyoda-ku**
**Tokyo(JP)**

(72) Inventor: **Matsukawa, Tadahiro, c/o Nagoya Tech.Inst.of**
**Mitsubishi Jukogyo K.K., 1 Aza Takamichi, Iwatsuka**
**-cho, Nakamura-ku, Nagoya-shi,**
**Aichi-ken(JP)**

(74) Representative: **Henkel, Feiler, Hänzel & Partner**
**Möhlstrasse 37**
**W-8000 München 80(DE)**

(54) Method for dividing and developing a Bézier curve.

(57) A method for dividing and developing a Bézier curve by making use of a control computer, an error calculator, a Bézier curve divider and an output device is improved. The improved method consists of the steps of:

(a) inputting coordinates of end points and control points of a Bézier curve to the control computer;

(b) calculating squares of distances of the input control points from a straight line connecting the end points, as errors;

(c) dividing the curve into two parts and newly inputting coordinates of end points and control points of a Bézier curve by employing the dividing point on the Bézier curve and one of the end points in the step (b) respectively as new end points, in the event that the error calculated in the Step (b) exceeds a tolerable range;

(d) repeating the steps (b) and (c) with respect to the control points and end points of the curve input in the step (c) until the errors calculated in the step (b) fall in the tolerable range; and (e) connecting the end points of the respective divided curves to develop the original curve;

the calculation and evaluation of the errors in the step (b) being carried out with respect to the respective control points.

BACKGROUND OF THE INVENTION:

Field of the Invention:

The present invention relates to a method for developing a curve for forming a character, etc. in an RIP (Raster Image Processor) of an electronic printer or the like, and more particularly to a method for dividing and developing a Bézier curve representing a character or the like at a high speed.

Description of the Prior Art:

In the prior art, the method for developing a curve was based on the following processings:
(1) Division of a curve and calculation of an error are successively processed through soft-ware processing.
(2) As disclosed in Laid-Open Japanese Patent Specification No. 1-175085 (1989), an outline font is formed by making use of parameters indicating coordinates of a curved section.
However, the above-mentioned method in the prior art involved the following problems to be resolved:
(1) Since it is necessary to successively process a large number of calculations at the time of dividing a curve and calculating an error, a lot of time was necessitated for development.
(2) In the case of indicating coordinates of a curved section with the aid of parameters, a tolerable error cannot be defined clearly.

SUMMARY OF THE INVENTION:

It is therefore one object of the present invention to provide a novel method for dividing and developing a Bézier curve at a high speed as compared to the above-mentioned in the prior art.
According to one feature of the present invention, there is provided a method for dividing and developing a Bézier curve by making use of a control computer, an error calculator, a Bézier curve divider and an output device, which method consists of the steps of (a) inputting coordinates of end points and control points of a Bézier curve to the control computer, (b) calculating squares of distances of the input control points from a straight line connecting the end points as errors, (c) dividing the curve into two parts and newly inputting coordinates of end points and control points of a Bézier curve by employing the dividing point on the Bézier curve and one of the end points used in the step (a) respectively as new end points in the event that the error calculated in the step (b) exceeds a tolerable range, (d) repeating the steps (b) and (c) with respect to the control points and end points of the curve input in the step (c) until the errors calculated in the step (b) fall in the tolerable range, and (e) connecting the end points of the respective divided curves to develop the original curve, the calculation and evaluation of the errors in the step (b) being carried out with respect to the respective control points.
According to the present invention, owing to the above-featured steps of the subject method, calculation of errors and division of a curve can be carried out at a high speed, and a developing speed for a curve is enhanced.
The above-mentioned and other objects, features and advantages of the present invention will become more apparent by reference to the following description of one preferred embodiment of the invention taken in conjunction with the accompanying drawings.

BRIEF DESCRIPTION OF THE DRAWINGS:

In the accompanying drawings:
Fig. 1 is a block diagram showing a construction of a curve developing system embodying the present invention;
Figs. 2(1), 2(2) and 2(3) are schematic views showing the process of forming a Bézier curve according to the present invention;
Fig. 3 is a block diagram showing a construction of an error calculator included in the curve developing system shown in Fig. 1;
Fig. 4 is a diagram showing a Bézier curve and errors to be employed according to the present invention;
Fig. 5 is a diagram showing the mode of dividing a Bézier curve according to the present invention; and
Fig. 6 is a block diagram showing a construction of a Bézier curve divider included in the curve developing system shown in Fig. 1.

DETAILED DESCRIPTION OF THE PREFERRED EMBODIMENT:

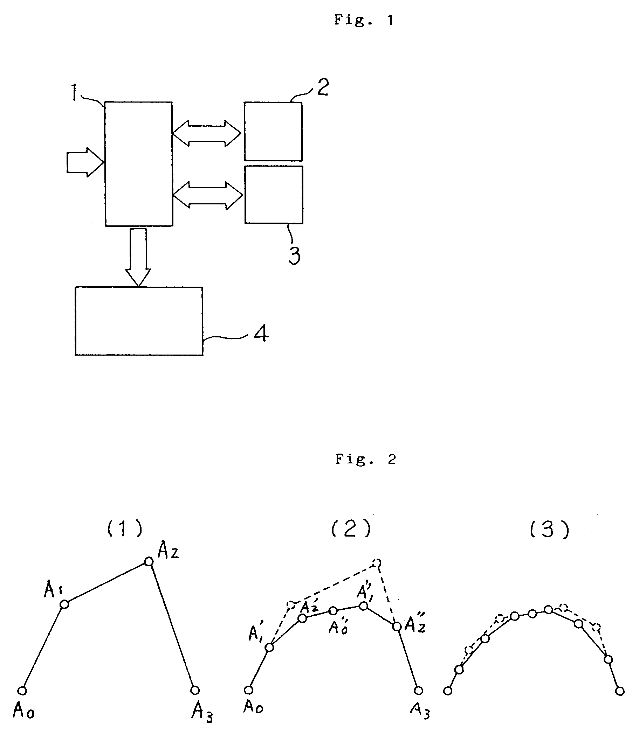

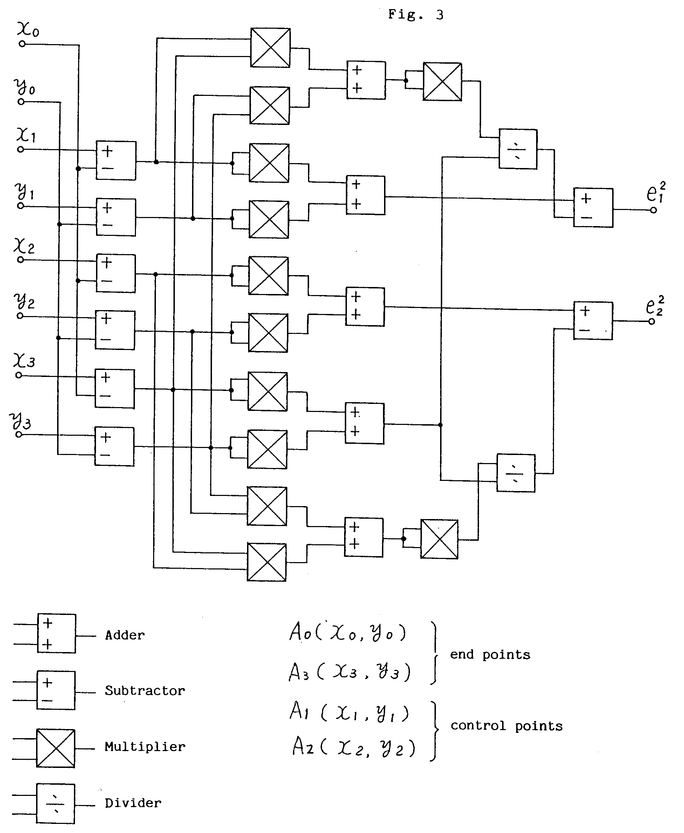

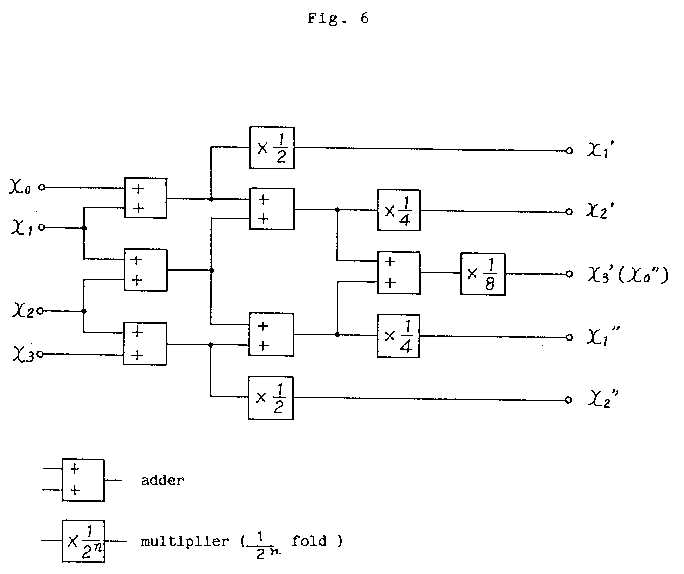

A construction of a curve developing system according to the present invention is illustrated in Fig. 1. In this figure, reference numeral 1 designates a control computer, that is, a computer for control purpose, which controls a flow of arithmetic operations. Reference numeral 2 designates an error calculator whose detailed construction is shown in Fig. 3, reference numeral 3 designates a curve divider which detailed construction is shown in Fig. 6, and reference numeral 4 designates an output device which is formed of a monitor display, a printer or an image memory.

As additional characteristic features of the present invention, the following points are to be noted:

(1) A parallel type calculator for sole use as shown in Fig. 1 is employed.

(2) In Fig. 3, $x_i$, $y_i$ (i = 0, 1, 2, 3) are x- and y-coordinates of end points $A_0$ and $A_3$ and control points $A_1$ and $A_2$, which serve as input values for the calculator. Also, errors $e_1{}^2$ and $e_2{}^2$ are defined as squares of distances of the control points of the input curve from a straight line connecting the end points, and these errors are given as outputs of the calculator in Fig. 3.

(3) In the curve divider shown in Fig. 6, $x_i$ (i = 0, 1, 2, 3) are x-coordinates of the end points and the control points, while $x_i{}'$, $x_i{}''$ (i = 0, 1, 2, 3) are x-coordinates of newly produced end points and control points. With respect to y-coordinates also, calculation is carried out in a quite similar manner.

The error calculator shown in Fig. 3 is provided for the purpose of calculating errors which serve as index for finishing division. As the error, a square of a distance of the control point from a straight line connecting the end points, is used.

The apparatus consisting of adders and multipliers in Fig. 6 is provided for the purpose of outputting new end points and new control points in the case of dividing a Bézier curve into two parts. The method for dividing the curve is such that a Bézier curve is divided into two parts as shown in Fig. 5, this dividing point and one of the original end points are employed as new end points, and coordinate of these new end points and new control points are sent to the control computer as shown in Fig. 6.

A flow of curve developing operations will be explained in the following:

At first, as shown in Fig. 2(1), coordinates of the control points $A_1$ and $A_2$ and the end points $A_0$ and $A_3$ are preset, and these coordinates are input to the control computer 1. The control computer 1 sends these coordinates to the error calculator 2. Immediately, the errors defined as squares of the distances of the control points $A_1$ and $A_2$ from a straight line connecting the end points $A_0$ and $A_3$ are calculated, and the calculated values are sent back to the control computer 1. The control computer 1 checks whether the value falls within a tolerable range or not, and if it is true, the straight line connecting the end points is sent to the output device 4, but if it is false, the coordinates of the control points and the end points are sent to the divider 3 to obtain new end points and new control points. As shown in Fig. 2(2), the control computer 1 repeats similar operations for the divided respective curves, the curves are developed, and a curve shown in Fig. 2(3) is obtained as a completed curve.

It is to be noted that the calculation of errors in the error calculator 3 (Fig. 3) is carried out in the following manner:

$$e_1{}^2 = |X_1 - X_0|^2 - \frac{\{(X_1 - X_0) \cdot (X_3 - X_0)\}^2}{|X_3 - X_0|^2}$$

$$e_2{}^2 = |X_2 - X_0|^2 - \frac{\{(X_2 - X_0) \cdot (X_3 - X_0)\}^2}{|X_3 - X_0|^2}$$

$X_0$ $(x_0, y_0)$, $X_3$ $(x_3, y_3)$ : coordinate vectors of end points $A_0$ and $A_3$

$X_1$ $(x_1, y_1)$, $X_2$ $(x_2, y_2)$ : coordinate vectors of control points $A_1$ and $A_2$

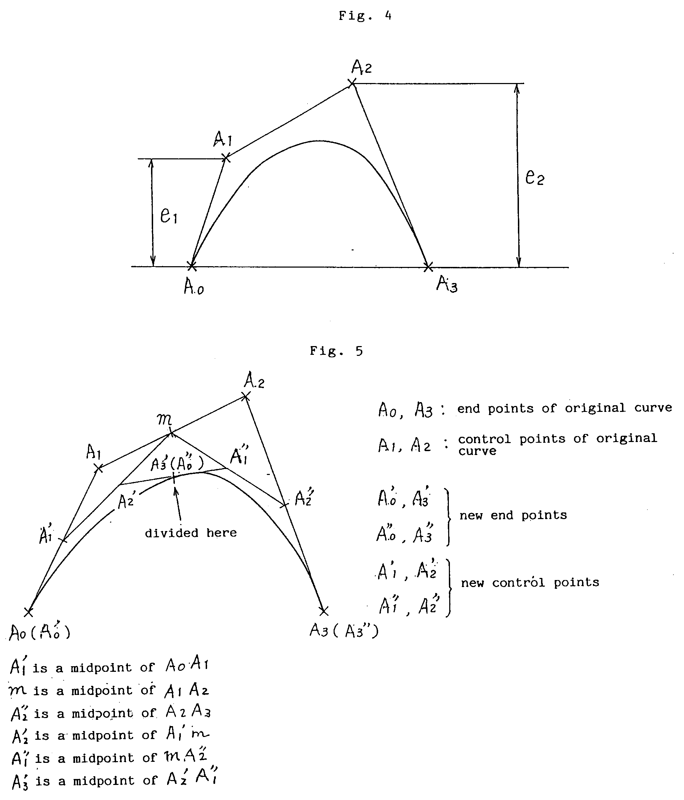

$e_1$, $e_2$ : errors (See Fig. 4)

$|X_i|$ : magnitude (or absolute value) of $X_i$

$X_i \cdot X_j$ : scalar product of $X_i$ by $X_j$

As will be obvious from the detailed description of the preferred embodiment above, according to the present invention, owing to the characteristic feature that the method for dividing and developing a Bézier curve makes use of a control computer, an error calculator, a Bézier curve divider and an output device, and that the method consists of the steps of (a) inputting coordinates of end points and control points of a Bézier curve to the control computer, (b) calculating squares of distances of the input control points from a straight line connecting the end points as errors, (c) dividing the curve into two parts and newly inputting coordinates of end points and control points of a Bézier curve by employing the dividing point on the Bézier curve and one of the end points used in the step (a) respectively as new end points in the event that the error calculated in the step (b) exceeds a tolerable range, (d) repeating the above-mentioned steps (b) and (c) with respect to the control points and end points of the curve input in the aforementioned step (c) until the errors calculated in the above-mentioned step (b) fall in the tolerable range, and (e) connecting the end points of the respective divided curves to develop the original curve, the calculation and evaluation of the errors in the above-mentioned step (b) being carried out with respect to the respective control points, the following advantages are attained.

That is, calculation of errors and division of a curve are speeded up, and a developing speed is enhanced.

While a principle of the present invention has been described above in connection to one preferred embodiment of the invention, it is intended that all matter contained in the above description and illustrated in the accompanying drawings shall be interpreted to be illustrative and not as a limitation to the scope of the invention.

## Claims

1. A method for dividing and developing a Bézier curve by making use of a control computer, an error calculator, a Bézier curve divider, and an output device; characterized in that said method consists of the steps of (a) inputting coordinates of end points and control points of a Bézier curve to said control computer; (b) calculating squares of distances of said input control points from a straight line connecting said end points as errors; (c) dividing said curve into two parts and newly inputting coordinates of end points and control points of a Bézier curve by employing the dividing point on said Bézier curve and one of the end points in said step (b) respectively as new end points, in the event that the error calculated in said step (b) exceeds a tolerable range; (d) repeating said steps (b) and (c) with respect to the control points and end points of the curve input in said step (c) until the errors calculated in said step (b) fall in the tolerable range; and (e) connecting the end points of the respective divided curves to develop the original curve; the calculation and evaluation of the errors in said step (b) being carried out with respect to the respective control points.

Fig. 1

Fig. 2

(1)　　　　　　　(2)　　　　　　　(3)

Fig. 3

$\mathcal{X}_0$

$\mathcal{Y}_0$

$\mathcal{X}_1$

$\mathcal{Y}_1$

$\mathcal{X}_2$

$\mathcal{Y}_2$

$\mathcal{X}_3$

$\mathcal{Y}_3$

$e_1^2$

$e_2^2$

Adder

Subtractor

Multiplier

Divider

$A_0(\mathcal{X}_0, \mathcal{Y}_0)$
$A_3(\mathcal{X}_3, \mathcal{Y}_3)$ } end points

$A_1(\mathcal{X}_1, \mathcal{Y}_1)$
$A_2(\mathcal{X}_2, \mathcal{Y}_2)$ } control points

Fig. 4

$A_2$

$A_1$

$e_2$

$e_1$

$A_0$        $A_3$

Fig. 5

$A_2$

$m$

$A_1$        $A_3'(A_0'')$        $A_1''$

$A_2'$

$A_1'$        $A_2''$

divided here

$A_0(A_0')$        $A_3(A_3'')$

$A_0, A_3$ :  end points of original curve

$A_1, A_2$ :  control points of original curve

$A_0', A_3'$
}  new end points
$A_0'', A_3''$

$A_1', A_2'$
}  new control points
$A_1'', A_2''$

$A_1'$ is a midpoint of $A_0 A_1$

$m$ is a midpoint of $A_1 A_2$

$A_2''$ is a midpoint of $A_2 A_3$

$A_2'$ is a midpoint of $A_1' m$

$A_1''$ is a midpoint of $m A_2''$

$A_3'$ is a midpoint of $A_2' A_1''$

Fig. 6

$X_0$ ○

$X_1$ ○

$X_2$ ○

$X_3$ ○

$+$
$+$

$\times \frac{1}{2}$   $X_1{}'$

$\times \frac{1}{4}$   $X_2{}'$

$\times \frac{1}{8}$   $X_3{}' (X_0{}'')$

$\times \frac{1}{4}$   $X_1{}''$

$\times \frac{1}{2}$   $X_2{}''$

$\boxed{\begin{array}{c}+\\+\end{array}}$ — adder

$\boxed{\times \dfrac{1}{2^n}}$ — multiplier ( $\dfrac{1}{2^n}$ fold )